# EUROPEAN PATENT APPLICATION

(11) **EP 4 769 859 A2**
(43) Date of publication of application: **01.07.2026**
(21) Application number: 26176982.2
(22) Date of filing: 06.12.2023
(51) Int. Cl.: H02H 9/04

(54) **SURGE PROTECTIVE DEVICE MODULE AND ELECTRICAL POWER SUPPLY SYSTEM**

(30) Priority: 28.12.2022 US 202263477389 P
(62) Divisional of application: 23214627.4
(71) Applicant: RAYCAP IP DEVELOPMENT LTD, Nicosia (CY)
(72) Inventor: URANIC, Rok, 1410 Zagorje ob Sav (SI); KAMENSEK, Sebastjan, 4220 kofja Loka (SI); KOURAKOS, Vasileios, 14565 Athens (GR); MARCUN, Marko, 4294 Kri e (SI); VUCINIC, Goran, 1216 Smlednik (SI)
(74) Representative: HL Kempner PartG mbB

(57) **Abstract**

A surge protective device (SPD) module for mounting on a busbar includes a busbar terminal contact, an overvoltage clamping element and a feed terminal. The busbar terminal contact is configured to electrically connect the SPD module to the busbar. The feed terminal is configured to electrically connect a feed cable to the SPD module. The overvoltage clamping element and the feed terminal are both electrically connected to the busbar by the busbar terminal contact when the SPD module is mounted on the busbar.

## Description

### Related Application(s)

The present application claims the benefit of and priority from U.S. Provisional Patent Application No. 63/477,389, filed December 28, 2022, the disclosure of which is incorporated herein by reference.

### Field

The present invention relates to surge protective devices.

### Background

Frequently, excessive voltage or current is applied across service lines that deliver power to residences and commercial and institutional facilities. Such excess voltage or current spikes (transient overvoltages and surge currents) may result from lightning strikes, for example. The above events may be of particular concern in telecommunications distribution centers, hospitals and other facilities where equipment damage caused by overvoltages and/or current surges is not acceptable and resulting down time may be very costly.

Typically, sensitive electronic equipment may be protected against transient overvoltages and surge currents using surge protective devices (SPDs). For example, an overvoltage protection device may be installed at a power input of equipment to be protected, which is typically protected against overcurrents when it fails. Typical failure mode of an SPD is a short circuit. The overcurrent protection typically employed is a combination of an internal thermal disconnector to protect the device from overheating due to increased leakage currents and an external fuse to protect the device from higher fault currents. Different SPD technologies may avoid the use of the internal thermal disconnector because, in the event of failure, they change their operation mode to a low ohmic resistance.

In the event of a surge current in a line L *(e.g.,* a voltage line of a three-phase electrical power circuit), protection of power system load devices may necessitate providing a current path to ground for the excess current of the surge current. The surge current may generate a transient overvoltage between the line L and the neutral line N (the neutral line N may be conductively coupled to an earth ground PE). Since the transient overvoltage significantly exceeds the operating voltage of the SPD, the SPD will become conductive, allowing the excess current to flow from line L through SPD to the neutral N. Once the surge current has been conducted to neutral N, the overvoltage condition ends and the SPD may become non-conducting again. However, in some cases, one or more SPDs may begin to allow a leakage current to be conducted even at voltages that are lower that the operating voltage of the SPDs. Such conditions may occur in the case of an SPD deteriorating.

Terminal blocks are commonly used to terminate and connect an electrical cable to a circuit or other electrical system via a busbar system.

### Summary

According to some embodiments, a surge protective device (SPD) module for mounting on a busbar includes a busbar terminal contact, an overvoltage clamping element and a feed terminal. The busbar terminal contact is configured to electrically connect the SPD module to the busbar. The feed terminal is configured to electrically connect a feed cable to the SPD module. The overvoltage clamping element and the feed terminal are both electrically connected to the busbar by the busbar terminal contact when the SPD module is mounted on the busbar.

According to some embodiments, the SPD module includes: a plurality of busbar terminal contacts, wherein each of the busbar terminal contacts is configured to receive and electrically connect the SPD module to a respective one of a plurality of busbars; a plurality of overvoltage clamping elements; and a plurality of feed terminals, wherein each of the feed terminals is configured to electrically connect a respective one of the feed cables to the SPD module. Each of the overvoltage clamping elements shares a respective one of the busbar terminal contacts with a respective one of the feed terminals to effect electrical connection with a corresponding one of the busbars when the SPD module is mounted on the busbars.

According to some embodiments, the overvoltage clamping element includes a varistor.

According to some embodiments, the SPD module further includes a gas discharge tube electrically connecting the varistor to the busbar terminal contact.

In some embodiments, the overvoltage clamping element includes a gas discharge tube.

In some embodiments, the feed terminal is a cable clamp connector.

According to some embodiments, the cable clamp connector is a spring clamp connector configured to receive and capture an end of the feed cable.

According to some embodiments, the SPD module includes a contact terminal assembly including the busbar terminal contact and a supplemental spring mounted on the busbar terminal contact.

According to some embodiments, the busbar terminal contact is substantially U-shaped in lateral cross-section and includes integral legs and a base section that collectively define a busbar receiving slot having a rear facing opening.

In some embodiments, the busbar terminal contact is a spring.

According to some embodiments, the SPD module includes a module housing defining a chamber containing the overvoltage clamping element.

In some embodiments, the SPD module includes an auxiliary protected earth terminal electrically connected to the busbar by the busbar terminal contact when the SPD module is mounted on the busbar.

According to some embodiments, the SPD module includes a thermal disconnector responsive to overheating of the overvoltage clamping element to disconnect the overvoltage clamping element.

In some embodiments, the SPD module includes an integral indicator system operative to provide, in response to actuation the thermal disconnector, an alert that the SPD module has failed.

According to some embodiments, the SPD module includes an auxiliary power output connector connected to the busbar terminal contact and the feed terminal.

In some embodiments, the auxiliary power output connector is provided with an inline fuse.

According to some embodiments, the SPD module includes a mounting system including a spring-loaded locking member to secure the SPD module to the busbar.

According to some embodiments, an electrical power supply system includes a busbar, a feed cable, and a surge protective device (SPD) module mounted on the busbar. The SPD module includes: a busbar terminal contact engaging and electrically connecting the SPD module to the busbar; an overvoltage clamping element; and a feed terminal configured to electrically connect a feed cable to the SPD module. The overvoltage clamping element and the feed terminal are both electrically connected to the busbar by the busbar terminal contact. The feed cable is connected to the SPD module at the feed terminal and feeds electrical power to the busbar through the SPD module.

### Brief Description of the Drawings

**FIG. 1** is a front view of an electrical power system including a surge protective device (SPD) module in accordance with some embodiments.

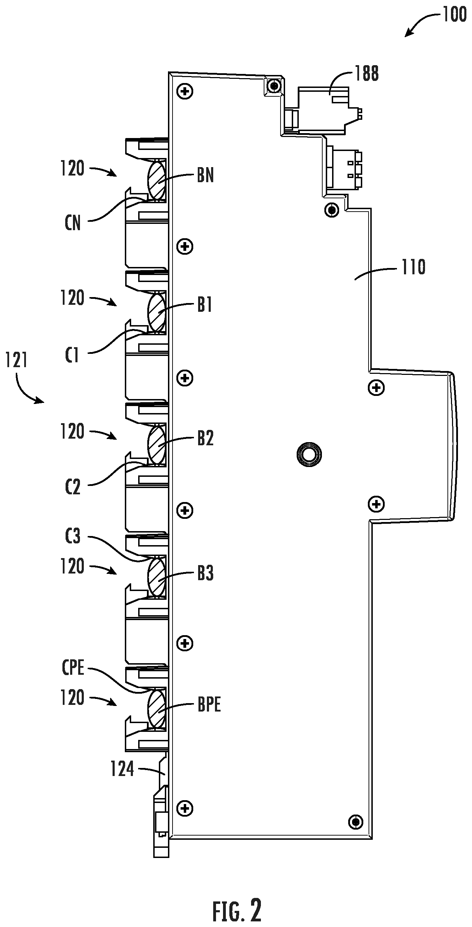

**FIG. 2** is a side view of the SPD module of **FIG. 1****.**

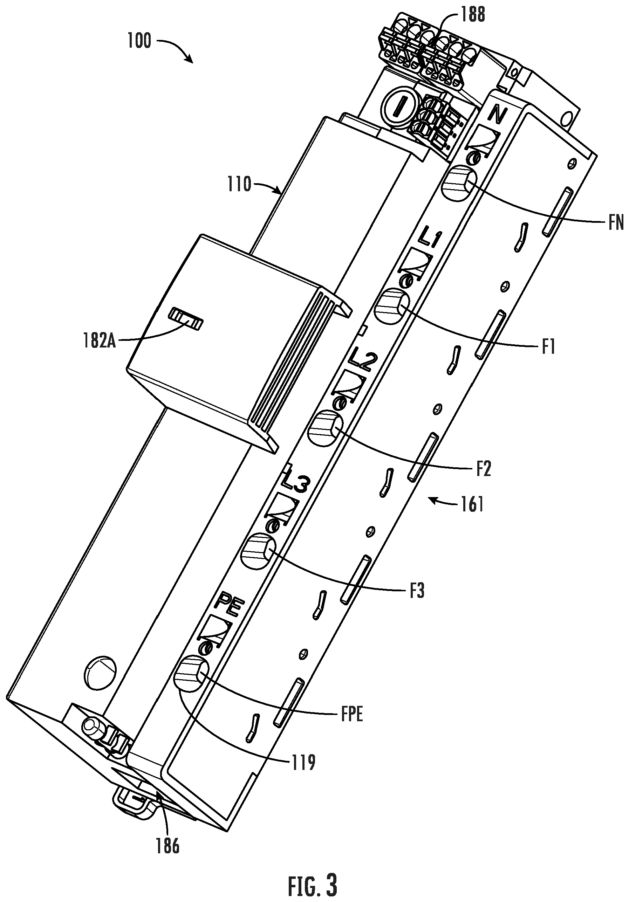

**FIG. 3** is a front perspective view of the SPD module of **FIG. 1****.**

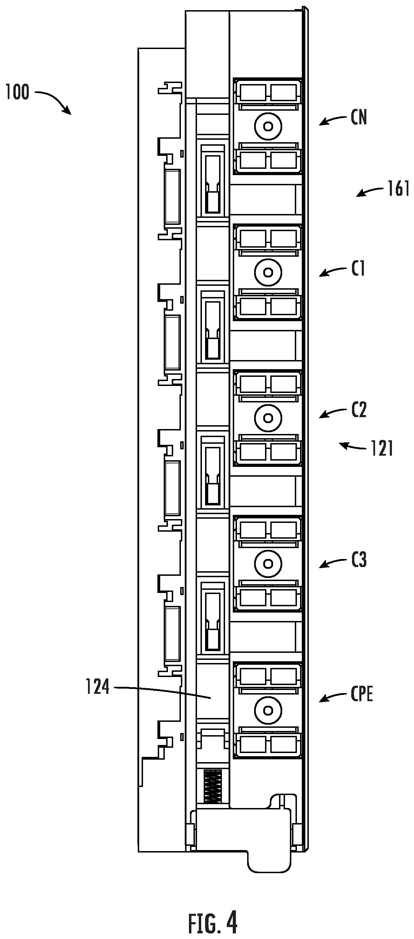

**FIG. 4** is a rear view of the SPD module of **FIG. 1****.**

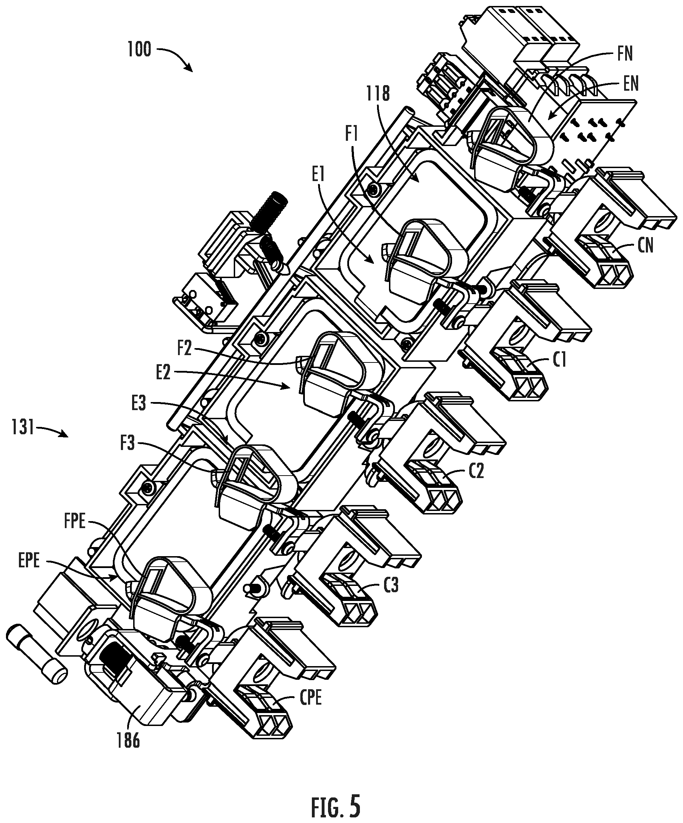

**FIG. 5** is a fragmentary, rear perspective view of the SPD module of **FIG. 1****.**

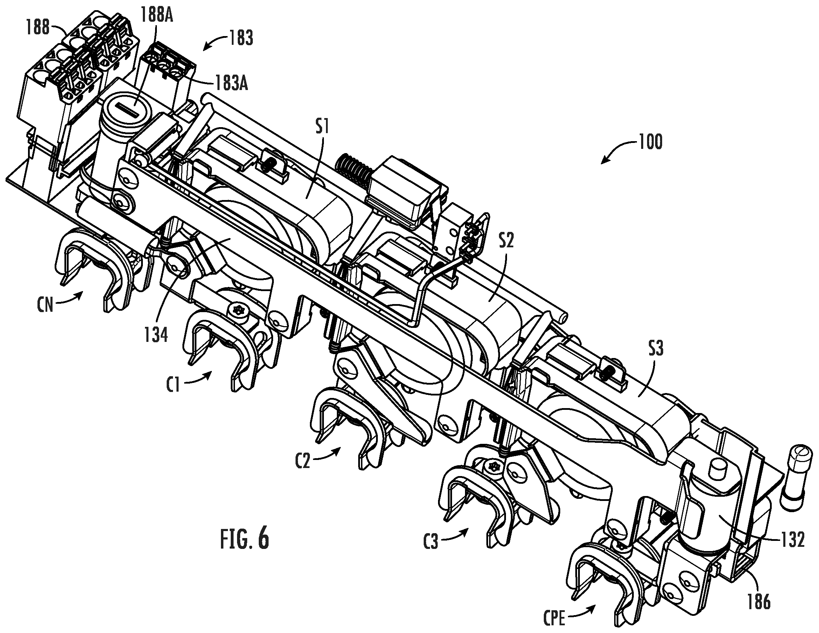

**FIG. 6** is a fragmentary, front perspective view of the SPD module of **FIG. 1****.**

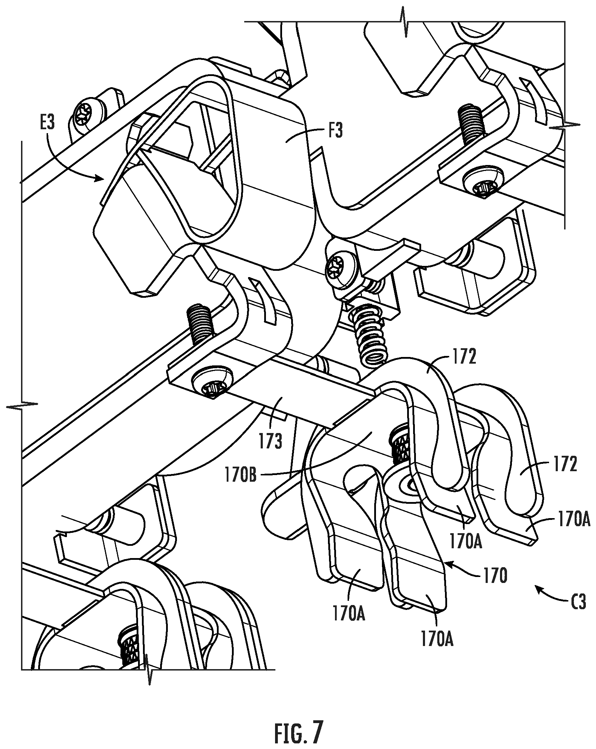

**FIG. 7** is an enlarged, fragmentary, rear perspective view of the SPD module of **FIG. 1****.**

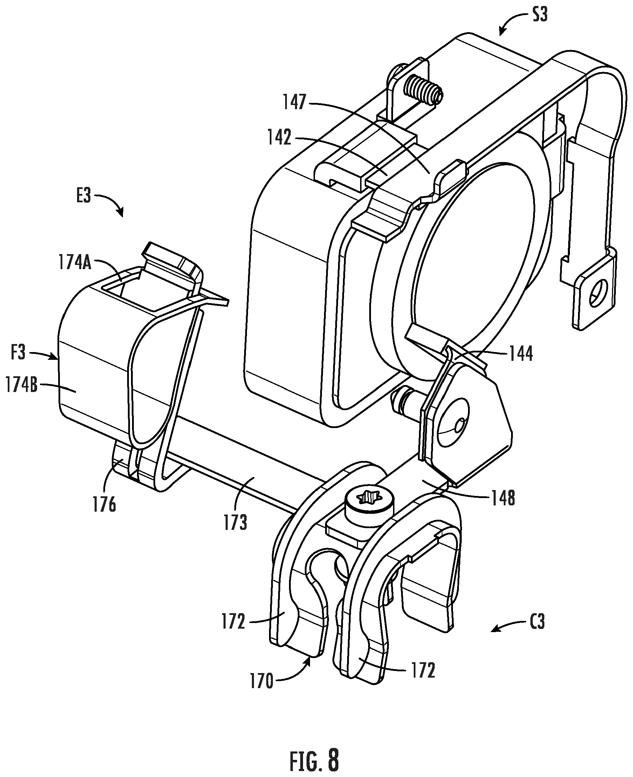

**FIG. 8** is an enlarged, fragmentary, front perspective view of the SPD module of **FIG. 1****.**
**FIG. 9** is a schematic view of an electrical circuit including the SPD module of **FIG. 1****,** a set of busbars, and a set of feed cables.

### Description

The present invention now will be described more fully hereinafter with reference to the accompanying drawings, in which illustrative embodiments of the invention are shown. In the drawings, the relative sizes of regions or features may be exaggerated for clarity. This invention may, however, be embodied in many different forms and should not be construed as limited to the embodiments set forth herein; rather, these embodiments are provided so that this disclosure will be thorough and complete, and will fully convey the scope of the invention to those skilled in the art.

It will be understood that when an element is referred to as being "coupled" or "connected" to another element, it can be directly coupled or connected to the other element or intervening elements may also be present. In contrast, when an element is referred to as being "directly coupled" or "directly connected" to another element, there are no intervening elements present. Like numbers refer to like elements throughout.

In addition, spatially relative terms, such as "under", "below", "lower", "over", "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "under" or "beneath" other elements or features would then be oriented "over" the other elements or features. Thus, the exemplary term "under" can encompass both an orientation of over and under. The device may be otherwise oriented (rotated 90 degrees or at other orientations) and the spatially relative descriptors used herein interpreted accordingly.

Well-known functions or constructions may not be described in detail for brevity and/or clarity.

As used herein the expression "and/or" includes any and all combinations of one or more of the associated listed items.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, "monolithic" means an object that is a single, unitary piece formed or composed of a material without joints or seams. Alternatively, a unitary object can be a composition composed of multiple parts or components secured together at joints or seams.

With reference to the figures, a surge protective device (SPD) module **100** according to embodiments of the present invention are shown therein. The SPD module **100** may be used in an electrical power supply system 10. The electrical power supply system **10** includes a rack or cabinet **62,** for example, containing a set **BS** of five busbars **B1, B2, B3, BN** and **BPE.** The electrical power supply system **10** also includes a set **TS** of electrically conductive cables **T1, T2, T3, TN** and **TPE.** The busbars **B1, B2** and **B3** are each connected to a respective one of three voltage lines **L1**, **L2** and **L3** of a three-phase electrical power supply system. The busbar **BN** is connected to a neutral line **N** of the three-phase electrical power supply system. The busbar **BPE** is connected to a ground or protected earth ground. Each of the three-phase lines may be provided with a main circuit breaker or fuse in or near the cabinet **62,** for example.

The SPD module **100** is mounted on the busbars **BS** to protect equipment **66** connected to the busbars **BS** from transient overvoltages and surge currents. The SPD module **100** can also be used to connect the electrically conductive cables **T1, T2, T3, TN** and **TPE** to the busbars **B1, B2, B3, BN** and **BPE,** respectively. In some embodiments, the cables **T1, T2, T3, TN** and **TPE** are electrical power feed cables (i.e., input power cables). When the SPD module **100** is mounted on the busbars **BS** and the cables **T1, T2, T3, TN** and **TPE** are electrically connected to the SPD module **100** as described herein, the cables **T1, T2, T3, TN** and **TPE** feed electrical power to the busbars **B1, B2, B3, BN** through the SPD module **100.**

The SPD module **100** includes a module housing or module housing assembly **110,** a mounting system **121,** a three-phase surge protective (SP) circuit **131,** an integral terminal connection system **161,** an integral indicator system **181,** an auxiliary protected earth (PE) terminal **186,** and an auxiliary power supply terminal **188.** Each of these components and systems forms an integral part of the SPD module **100** and is disposed on the housing **110,** as discussed in more detail below.

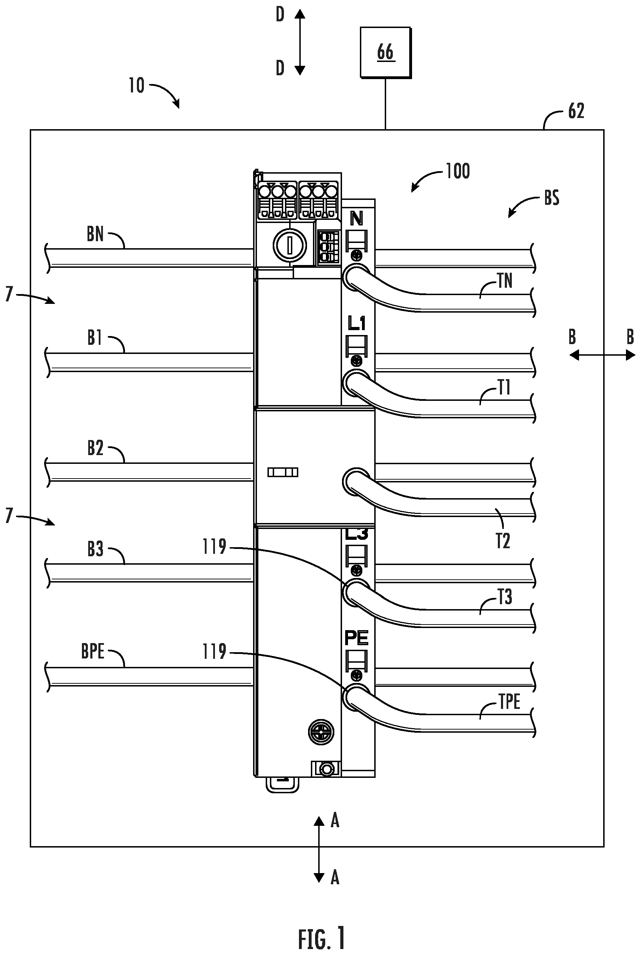

According to some embodiments and as shown, the module **100** is configured, sized and shaped for mounting on the set **BS** of busbars **B1-B3, BN, BPE.** The busbars **B1-B3, BN, BPE** are arranged in series such that they extend lengthwise substantially parallel to one another and are laterally spaced apart by gaps **7.** Each busbar extends lengthwise parallel to a busbar longitudinal axis **B-B (****FIG. 1****).** The busbars are serially disposed along a busbar lateral axis **D-D (****FIG. 1****).**

According to some embodiments and as shown, the module **100** is removably and replaceably mountable on the busbars **B1-B3, BN, BPE.**

The module **100** has a primary axis **A-A** that extends substantially perpendicular to the longitudinal axis **B-B** of the busbars **B1-B3, BN, BPE,** and a heightwise axis that extends substantially perpendicular to each of the axes **A-A** and **B-B**. As used herein, "front" or "distal" refers to the end of the module **100** farther away from the busbars **B1-B3, BN, BPE** when the module **100** is mounted on the busbars **B1-B3, BN, BPE,** and "rear" or "proximal" refers to the end of the module **100** nearer the busbars **B1-B3, BN, BPE.**

The housing **110** may be formed from one or more housing members. The housing **110** forms an enclosure that defines and encloses an internal cavity or chamber **118.** The chamber **118** may be partitioned into multiple enclosed chambers.

The housing **110** may be formed of any suitable electrically insulating material or materials. In some embodiments, each of the housing members is formed of a rigid polymeric material. According to some embodiments, the housing members are formed of an electrically insulating polymeric material. Suitable polymeric materials may include polyamide (PA), polypropylene (PP), polyphenylene sulfide (PPS), polybutylene terephthalate (PBT) or ABS, for example. The polymeric material may be provided with or without glass fiber reinforcement.

The mounting system **121** includes busbar receiver slots **120** (defined in the housing **110),** a spring-loaded locking member **124,** and busbar terminal assemblies **C1, C2, C3, CN, CPE** (collectively referred to herein as the terminal assemblies **C).** The busbar terminal assemblies **C1, C2, C3, CN, CPE** and the busbar receiver slots **120** are sized and configured to receive the busbars **B1-B3, BN, BPE.**

The electrical contact terminal assemblies **C1, C2, C3, CN, CPE** may each be constructed and operate in the same manner. The terminal assembly **C3** will be described in greater detail hereinbelow. However, it will be appreciated that this description likewise applies to the terminal assemblies **C1, C2, CN, CPE.**

The contact terminal assembly **C3** includes a contact member **170,** a bridge portion **173,** and a pair of supplemental springs **172.** The contact member **170** and the supplemental springs **172** together form a connector subassembly that is seated in a corresponding busbar slot **120.**

The contact member **170** is a thin sheet that is substantially U-shaped in lateral cross-section. The contact member includes four integral legs **170A** depending and cantilevered from the side edges of a base section **170B.**

The base section **170B** and legs **170A** collectively define a busbar receiving slot **170C** having a rear facing opening. In some embodiments, the contact member **170** is a spring.

The contact member **170** may be formed of any suitable resilient, electrically conductive material. In some embodiments, the contact member **170** is formed of metal. In some embodiments, the contact member **170** is formed of copper or copper alloy. Suitable metal materials may include CuSn6, Cu, or CuSn0.15, for example. In some embodiments, the contact member **170** is unitary (composite or monolithic) and, in some embodiments, the contact member **170** is monolithic. In some embodiments, the contact member **170** is formed (*e.g.,* cut and bent) from sheet metal.

The bridge portion **173** is electrically conductive and extends laterally from the contact member **173.** In some embodiments (e.g., as illustrated), the bridge portion **173** is integrally formed with the contact member **170.** In some embodiments (e.g., as illustrated), the bridge portion **173** is monolithic with the contact member **170.**

The bridge portion **173** may be formed of any suitable electrically conductive material. In some embodiments, the bridge portion **173** is formed of metal. In some embodiments, the contact member **173** is formed of copper or copper alloy. Suitable metal materials may include CuSn6, Cu, or CuSn0.15, for example.

The three-phase surge protective (SP) circuit **131** includes a protected earth gas discharge tube (PE GDT) **132,** a first line SPD assembly **S1**, a second line SPD assembly **S2,** a third line SPD assembly **S3,** and a neutral bridge conductor **134.** The SPD assemblies **S1-S3** each include a first terminal **142,** a second terminal **144,** and one or more overvoltage clamping elements **145** electrically connected between the terminals **142** and **144.**

The overvoltage clamping element(s) **145** may include a varistor (e.g., a metal-oxide varistor (MOV)) and/or a gas discharge tube (GDT).

Each second terminal **144** is electrically connected to the terminal assembly **CPE** via an associated thermal disconnector **147** and the neutral bridge conductor **134.**

Each first terminal **142** is electrically connected to a respective one of the contact terminal assemblies **C1, C2, C3** by an electrically conductive bridge member **148** and the corresponding bridge portion **173.**

The integral terminal connection system **161** includes the busbar terminal assemblies **C1, C2, C3, CN, CPE** and five electrical connection assemblies **E1, E2, E3, EN, EPE.**

Each electrical connection assemblies **E1, E2, E3, EN, EPE** includes an electrically conductive feed terminal **F1**, **F2, F3, FN, FPE** and a bridge member **176.**

Each feed terminal **F1**, **F2, F3, FN, FPE** may be a cable clamp connector. Each feed terminal **F1**, **F2, F3, FN, FPE** includes an opening **174A** to receive the end of a respective one of the cables **T1, T2, T3, TN, TPE,** and a spring mechanism **174B** to fix or capture the cable **T1, T2, T3, TN, TPE** therein. However, it will be appreciated that other types and configurations of connectors may be used for the feed terminals **F1**, **F2, F3, FN, FPE** to secure and electrically connect the feed cable ends. The housing **110** includes an opening **119** at each feed terminal **F1**, **F2, F3, FN, FPE** to receive the cable end.

The integral indicator system **181** may include a local alert mechanism **182** and/or a remote alert mechanism **183.** In the illustrated SPD module **100,** the local alert mechanism **182** includes a displaceable indicator member **182A.** In the illustrated SPD module **100,** the remote alert mechanism **183** includes an RC connector **183A** for connecting to a remote monitoring system.

In use, the SPD module **100** is mounted on the busbars **B1, B2, B3, BN** and **BPE** as shown and described such that each of the busbars **B1, B2, B3, BN** and **BPE** is received in a respective one of the busbar terminal assemblies **C1, C2, C3, CN,** and **CPE,** respectively, thereby making mechanical and electrical contact between the busbars **B1, B2, B3, BN** and **BPE** and the busbar terminal assemblies **C1, C2, C3, CN,** and **CPE,** respectively. The feed cables **T1, T2, T3, TN,** and **TPE** are each inserted one of the feed terminals **F1**, **F2, F3, FN,** and **FPE,** respectively, thereby making mechanical and electrical contact between feed cables **T1, T2, T3, TN,** and **TPE** and the feed terminals **F1, F2, F3, FN,** and **FPE,** respectively.

In this manner, the line SPD assemblies **S1, S2, S3,** the neutral bridge conductor member **134,** and the PE auxiliary terminal **186** are each electrically connected to their respective busbars **B1**, **B2, B3, BN** and **BPE** via the busbar terminal assemblies **C1, C2, C3, CN,** and **CPE,** respectively. Additionally, in this manner the feed cables **T1, T2, T3, TN,** and **TPE** are each electrically connected to their respective busbars **B1, B2, B3, BN** and **BPE** via the busbar terminal assemblies **C1, C2, C3, CN,** and **CPE,** respectively.

The thermal disconnectors **147** are responsive to overheating of the overvoltage clamping element to disconnect the overvoltage clamping element. The integral indicator system **181** is operative to provide via the local alert mechanism **182** and the remote alert mechanism **183,** in response to actuation of a thermal disconnector **147,** an alert that the SPD module **100** has failed.

The auxiliary power output connector **188** is connected to the busbar terminal assemblies **C1** and is provided with an inline fuse **188A.**

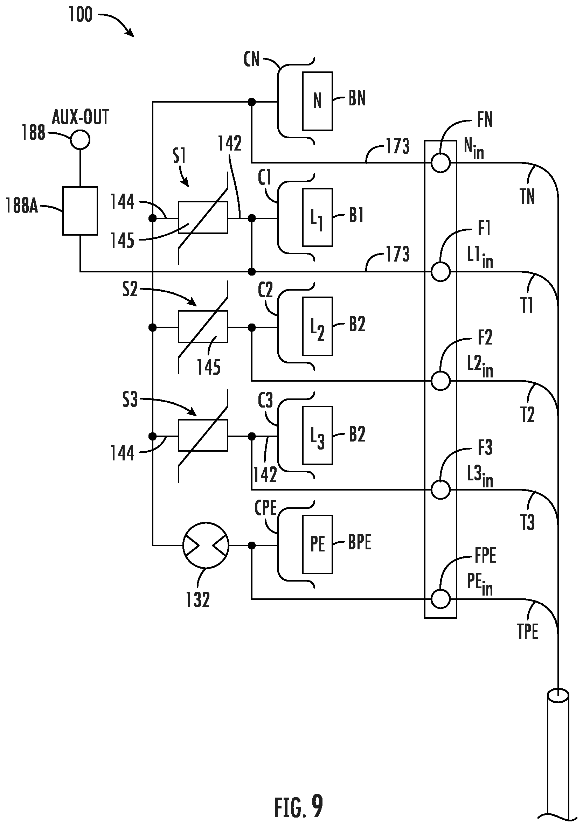

**FIG. 9** is a schematic view representing an electrical circuit including the SPD module **100,** the busbars **B1, B2, B3, BN** and **BPE** and the feed cables **T1, T2, T3, TN,** and **TPE.**

Therefore, it will be appreciated that in accordance with embodiments of the invention there is provided a modular SPD device with an integrated terminal block for a busbar system. The terminal block is integrated with the SPD such that block power feed/input terminals are directly connected to the SPD busbar terminals. That is, the feed terminals and the SPD elements are each internally connected to the same set of busbar contacts. Therefore, the terminal block and SPD elements share a single set of busbar terminals. The SPD device provides combined protections and power connectivity for busbar systems in an integrated module. This arrangement can provide lower cost, reduced complexity, improved handling and convenience, and improved form factor as compared to known solutions.

Many alterations and modifications may be made by those having ordinary skill in the art, given the benefit of present disclosure, without departing from the spirit and scope of the invention. Therefore, it must be understood that the illustrated embodiments have been set forth only for the purposes of example, and that it should not be taken as limiting the invention as defined by the following claims. The following claims, therefore, are to be read to include not only the combination of elements which are literally set forth but all equivalent elements for performing substantially the same function in substantially the same way to obtain substantially the same result. The claims are thus to be understood to include what is specifically illustrated and described above, what is conceptually equivalent, and also what incorporates the essential idea of the invention.

Aspects of some exemplary embodiments of the present invention are described in the following clauses:
1. A surge protective device (SPD) module for mounting on a busbar, the SPD module comprising:
   a busbar terminal contact configured to electrically connect the SPD module to the busbar;
   an overvoltage clamping element; and
   a feed terminal configured to electrically connect a feed cable to the SPD module;
   wherein the overvoltage clamping element and the feed terminal are both electrically connected to the busbar by the busbar terminal contact when the SPD module is mounted on the busbar.
2. The SPD module of Clause 1 including:
   a plurality of busbar terminal contacts, wherein each of the busbar terminal contacts is configured to receive and electrically connect the SPD module to a respective one of a plurality of busbars;
   a plurality of overvoltage clamping elements; and
   a plurality of feed terminals, wherein each of the feed terminals is configured to electrically connect a respective one of the feed cables to the SPD module;
   wherein each of the overvoltage clamping elements shares a respective one of the busbar terminal contacts with a respective one of the feed terminals to effect electrical connection with a corresponding one of the busbars when the SPD module is mounted on the busbars.
3. The SPD module of any of the preceding clauses wherein the overvoltage clamping element includes a varistor.
4. The SPD module of Clause 3 further including a gas discharge tube electrically connecting the varistor to the busbar terminal contact.
5. The SPD module of any of the preceding clauses wherein the overvoltage clamping element includes a gas discharge tube.
6. The SPD module of any of the preceding clauses wherein the feed terminal is a cable clamp connector.
7. The SPD module of any of the preceding clauses wherein the cable clamp connector is a spring clamp connector configured to receive and capture an end of the feed cable.
8. The SPD module of any of the preceding clauses including a contact terminal assembly including the busbar terminal contact and a supplemental spring mounted on the busbar terminal contact.
9. The SPD module of any of the preceding clauses wherein the busbar terminal contact is substantially U-shaped in lateral cross-section and includes integral legs and a base section that collectively define a busbar receiving slot having a rear facing opening.
10. The SPD module of Clause 9 wherein the busbar terminal contact is a spring.
11. The SPD module of any of the preceding clauses including a module housing defining a chamber containing the overvoltage clamping element.
12. The SPD module of any of the preceding clauses including an auxiliary protected earth terminal electrically connected to the busbar by the busbar terminal contact when the SPD module is mounted on the busbar.
13. The SPD module of any of the preceding clauses including a thermal disconnector responsive to overheating of the overvoltage clamping element to disconnect the overvoltage clamping element.
14. The SPD module of Clause 13 including an integral indicator system operative to provide, in response to actuation the thermal disconnector, an alert that the SPD module has failed.
15. The SPD module of any of the preceding clauses including an auxiliary power output connector connected to the busbar terminal contact and the feed terminal.
16. The SPD module of Clause 15 wherein the auxiliary power output connector is provided with an inline fuse.
17. The SPD module of any of the preceding clauses including a mounting system including a spring-loaded locking member to secure the SPD module to the busbar.
18. An electrical power supply system comprising:
   a busbar;
   a feed cable; and
   a surge protective device (SPD) module mounted on the busbar, the SPD module comprising:
      a busbar terminal contact engaging and electrically connecting the SPD
   module to the busbar;
      an overvoltage clamping element; and
      a feed terminal configured to electrically connect a feed cable to the SPD module;
   wherein the overvoltage clamping element and the feed terminal are both electrically connected to the busbar by the busbar terminal contact; and
   wherein the feed cable is connected to the SPD module at the feed terminal and feeds electrical power to the busbar through the SPD module.

## Claims

1. A surge protective device (SPD) module (100) for mounting on a busbar (B1, B2, B3, BN, BPE), the SPD module comprising:
a busbar terminal contact (170) configured to electrically connect the SPD module to the busbar;
an overvoltage clamping element including a varistor (145);
a feed terminal (F1, F2, F3, FN, FPE) configured to electrically connect a feed cable (T1, T2, T3, TN, TPE) to the SPD module; and
a gas discharge tube (132) electrically connecting the varistor to the busbar terminal contact;
wherein the overvoltage clamping element and the feed terminal are both electrically connected to the busbar by the busbar terminal contact when the SPD module is mounted on the busbar.

2. The SPD module of Claim 1 including:
a plurality of busbar terminal contacts (170), wherein each of the busbar terminal contacts is configured to receive and electrically connect the SPD module to a respective one of a plurality of busbars;
a plurality of overvoltage clamping elements; and
a plurality of feed terminals (F1, F2, F3, FN, FPE), wherein each of the feed terminals is configured to electrically connect a respective one of the feed cables to the SPD module;
wherein each of the overvoltage clamping elements shares a respective one of the busbar terminal contacts with a respective one of the feed terminals to effect electrical connection with a corresponding one of the busbars when the SPD module is mounted on the busbars.

3. The SPD module of any of the preceding claims wherein the feed terminal (F1, F2, F3, FN, FPE) is a cable clamp connector.

4. The SPD module of any of the preceding claims wherein the cable clamp connector is a spring clamp connector configured to receive and capture an end of the feed cable.

5. The SPD module of any of the preceding claims including a contact terminal assembly (C1, C2, C3, CN, CPE) including the busbar terminal contact and a supplemental spring (172) mounted on the busbar terminal contact.

6. The SPD module of any of the preceding claims wherein the busbar terminal contact (170) is substantially U-shaped in lateral cross-section and includes integral legs (170A) and a base section (170B) that collectively define a busbar receiving slot having a rear facing opening.

7. The SPD module of Claim 6 wherein the busbar terminal contact is a spring.

8. The SPD module of any of the preceding claims including a module housing defining a chamber containing the overvoltage clamping element.

9. The SPD module of any of the preceding claims including an auxiliary protected earth terminal electrically connected to the busbar by the busbar terminal contact when the SPD module is mounted on the busbar.

10. The SPD module of any of the preceding claims including a thermal disconnector (147) responsive to overheating of the overvoltage clamping element to disconnect the overvoltage clamping element.

11. The SPD module of Claim 10 including an integral indicator system (181) operative to provide, in response to actuation the thermal disconnector, an alert that the SPD module has failed.

12. The SPD module of any of the preceding claims including an auxiliary power output connector connected to the busbar terminal contact and the feed terminal.

13. The SPD module of Claim 12 wherein the auxiliary power output connector is provided with an inline fuse.

14. The SPD module of any of the preceding claims including a mounting system including a spring-loaded locking member (124) to secure the SPD module to the busbar.

15. An electrical power supply system (10) comprising:
a busbar (B1, B2, B3, BN, BPE);
a feed cable (T1, T2, T3, TN, TPE); and
a surge protective device (SPD) module mounted on the busbar, the SPD module comprising:
a busbar terminal contact (170) engaging and electrically connecting the SPD module to the busbar;
an overvoltage clamping element including a varistor (145);
a feed terminal (F1, F2, F3, FN, FPE) configured to electrically connect the feed cable to the SPD module; and
a gas discharge tube (132) electrically connecting the varistor to the busbar terminal contact;
wherein the overvoltage clamping element and the feed terminal are both electrically connected to the busbar by the busbar terminal contact; and wherein the feed cable is connected to the SPD module at the feed terminal and feeds
electrical power to the busbar through the SPD module.
